# Europäisches Patentamt
## European Patent Office
## Office européen des brevets

(11) Publication number: **0 064 200**
**B1**

(12) **EUROPEAN PATENT SPECIFICATION**

(45) Date of publication of patent specification: **08.07.87**

(51) Int. Cl.⁴: **G 01 N 21/15**

(21) Application number: **82103233.1**

(22) Date of filing: **16.04.82**

(54) Apparatus for analyzing a gas.

(30) Priority: **24.04.81 US 257063**

(43) Date of publication of application:
**10.11.82 Bulletin 82/45**

(45) Publication of the grant of the patent:
**08.07.87 Bulletin 87/28**

(84) Designated Contracting States:
**DE FR GB SE**

(56) References cited:
**EP-A-0 006 749**
**US-A-3 628 028**
**US-A-3 833 305**

(73) Proprietor: **MEASUREX CORPORATION**
**One Results Way**
**Cupertino, California 95014 (US)**

(72) Inventor: **Rice, Richard G.**
**22680 Silver Oak Ct.**
**Cupertino, Calif. (US)**
Inventor: **Boissevain, Mathew G.**
**27181 Sherlock Rd.**
**Los Altos Hills Calif. 94022 (US)**
Inventor: **Dubin, Robert R.**
**4669 Persimmon Place**
**San Jose Calif. 95129 (US)**

(74) Representative: **Finck, Dieter et al**
**Patentanwälte v. Füner, Ebbinghaus, Finck**
**Mariahilfplatz 2 & 3**
**D-8000 München 90 (DE)**

Courier Press, Leamington Spa, England.

## Description

The invention relates to an apparatus for analyzing a first gas stream comprising a cylindrical housing having a middle zone provided with two opposite apertures for passing a first gas through the housing intercepting a beam of radiation enclosed by the housing and being emitted from a source on the one end of the housing and impinging on a detector on the other end of the housing, and having two outer zones between the middle zone and the source and the detector, respectively, which outer zones are connectable with blowers for introducing a second gas.

EP—A—0 006 749 discloses a cylindrical housing with two opposite apertures in its middle part which can be closed by flaps. When these flaps are opened, the gases of the stack can usually vertically flow through the cylindrical housing, along the axis of which a beam of radiation extends from a source to a detector arranged at the one and the other end of the housing. Between the middle part of the housing and the source and the detector, respectively, there is an outer zone of the housing, which is filled by means of blowers with a second gas, which second gas flows out into the stream of the first gas in order to avoid a substantial flow-in of the first gas into the outer zones of the housing.

As the mixing condition between the two gas streams between the middle zone and the adjacent outer zones cannot be clearly defined because of the shown possible stream patterns, the analyzing measurements referring to the first gas stream are disadvantageously influenced.

The device shown in US—A—3 628 028 shows a vertical duct through which a sample flow is passing. Vertically to the duct clean air is introduced through this duct and deflected by guide walls parallel to the sample flow, which guide walls end below the beam of radiation going through windows in the duct from a radiation source to a radiation sensor. As the clean air introduced through the tubes and deflected from guide walls within the duct is very turbulent, it will intermingle with the sample flow immediately at the end of the guide wall below the beam of radiation such that the measurement conditions within the area of the beam of radiation are not clearly determined or in other words, with this device a precisely defined boundary layer between the two gas streams cannot be obtained.

The US—A—3 833 305 shows the generation of a uniform distribution of a gas stream in a diffuser-like housing, which is surrounded by a ring wall, through which a second gas is guided in the same direction. As a beam of radiation is directed through the two gas streams, there are openings in the ring wall and the wall separating the annular space and the central space. With this arrangement it is possible to prevent a contact of the gas in the central space with the sensor or the detector. It can be possible with this arrangement to prevent mixing of the two gas streams, however, it is very complicated and expensive.

It is therefore the object of the invention to improve the apparatus according to the first section of the specification such that the precise analyzing of the first gas stream can be obtained by exactly defining the contacting zone of the two gas streams.

This object is obtained with the said apparatus in that according to the invention the blowers are connected by conduits with nozzle means arranged between each outer zone and the middle zone at the extremities of the first aperture generating a fluid curtain of the second gas substantially parallel to the flow direction of the first gas and substantially perpendicular to the beam of radiation and directed to impinge the ends of the second aperture, and in that the ratio of the volumetric flow rate of the second gas through the nozzle means and through the corresponding outer zone of the housing is one-to-one to four-to-one.

With the structure of the apparatus according to the invention it is possible to blow a clearly defined air curtain parallel to the first gas stream at the edges of the apertures forming the middle zone, maintaining the second gas in the outer zones free from mixing with the first gas stream.

Preferably each nozzle means comprises a ring coupled to each outer zone of the housing, a plenum chamber mounted on the ring and positioned adjacent to the edge of the aperature and including a casing shaped in the form of an annular section, having a lower indentation communicated with the conduit and an upper indentation spaced apart from the lower indentation by a rib, a plate covering the lower indentation and the rib which is spaced from the plate to form a slot shaped nozzle orifice therebetween.

Advantageously the slot shaped nozzle orifice is about 0.25 to 1.27 mm and preferably about 0.76 mm wide.

It is convenient that the velocity of the stream of the second gas forming the air curtain is about 60 to 100 km/h.

The apparatus according to the invention is further explained by means of drawings.

Fig. 1 is a side view of the apparatus,

Fig. 2 is a section view of Fig. 1 taken along line 2—2,

Fig. 3 is the same sectional view as Fig. 2 with the apparatus in a different operating mode,

Fig. 4 is a perspective view of a portion of the apparatus, showing the nozzle means,

Fig. 5 is a side view of the nozzle means,

Fig. 6 is a top view of the nozzle means,

Fig. 7 is a detailed view of part of the device shown in Figs. 4 to 6,

Fig. 8 is a cross-sectional view of the device shown in Fig. 7, taken along line 8—8, and

Fig. 9 is a schematic side view showing the direction and manner of gas flow in the operation of the apparatus.

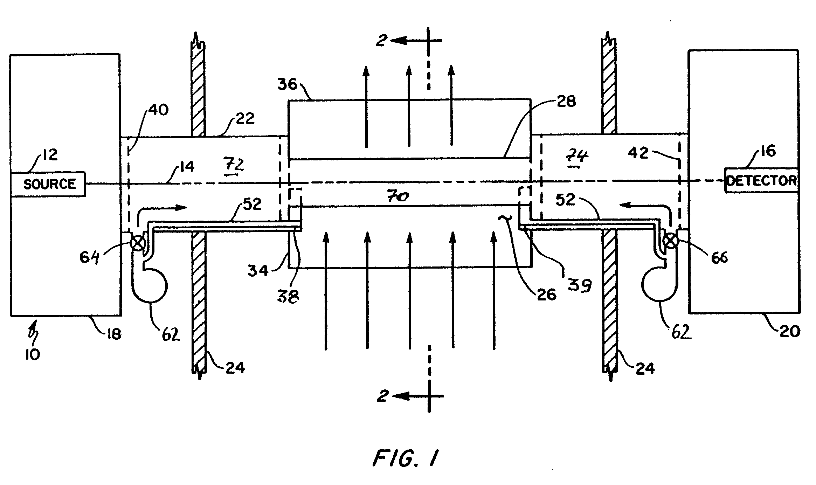

The apparatus for analyzing a first gas stream as shown in Fig. 1 comprises a source 12, capable of emitting a beam 14 of radiation. The beam 14 is aligned to impinge a detector 16. The source 12 is contained in a first enclosure 18. The first enclosure 18 provides a suitable environment such as an atmosphere with regulated temperature and humidity for the source 12 and its associated electronics. Similarly, the detector 16 is in a second enclosure 20. The second enclosure 20 provides suitable environmental conditions for the operation of the detector 16 and its associated electronics.

A cylindrical housing 22 encloses the beam 14. The housing 22 is typically placed across a stack 24, which is the exhaust output of a furnace to carry the gaseous by-products of combustion from the furnace. The housing 22 has two apertures 26 and 28 permitting the stream of gas flowing through the stack 24 to enter the housing 22, to intercept the beam 14, and to exit from the housing 22. The gas of the stack 24 flowing in the direction as shown by the arrows, enters the housing 22 through the first aperture 26, intercepts the beam 14 and exits from the second aperture 28. A first door 34 is adapted to close the first aperture 26. Similarly, a second door 36 is adapted to close the second aperture 28. Two glass windows 40 and 42 are sealingly coupled respectively to the left and right ends of the housing 22 to prevent gases from flowing from the housing 22 into the enclosures 18 or 20.

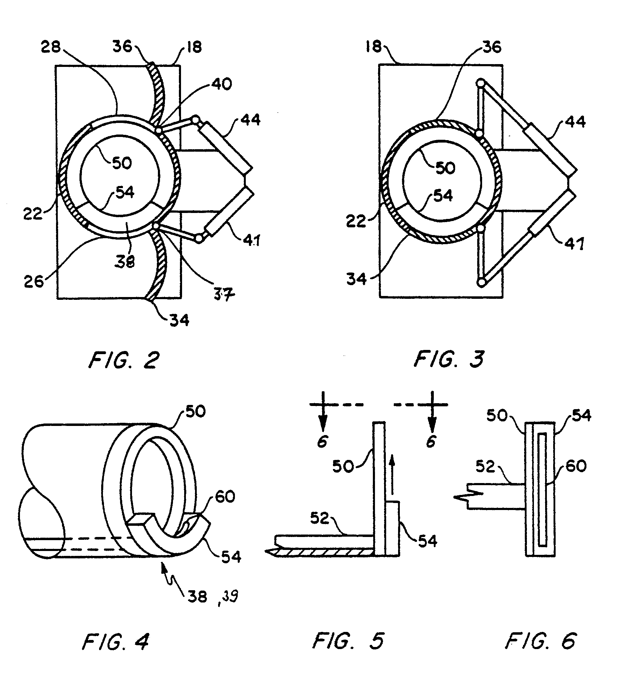

Turning to Figs. 2 and 3, the doors 34 and 36 are illustrated in greater detail. The doors 34 and 36 are coupled to the housing 22 by hinges 37 and 40, respectively. Two hydraulic cylinders 41 and 44 are coupled to the housing 22 adjacent the doors 34 and 36. The hydraulic cylinders can be operated to open the doors as shown in Fig. 2 and to close the doors as shown in Fig. 3.

Turning again to Fig. 1, nozzle means 38 and 39 are positioned to define a region in the housing 22 within which the stack gas is substantially confined. In particular, the nozzle means 38 and 39 are capable of generating a fluid curtain which intercepts the beam 14 at a direction substantially perpendicular to the beam 14. The fluid curtain generated by the nozzle means 38 and 39 is moving substantially parallel to the direction of flow of the gas flowing through the stack 24 as shown by the arrows. Each of said nozzle means 38 and 39 is placed at the extremities of the first aperture 26 and is capable of generating a fluid curtain directed to impinge the ends of the second aperture 28.

Details of the nozzle means 38 are shown in Figs. 4 to 8, it being understood that nozzle means 39 is substantially the same. The nozzle means 38 includes a ring 50, a conduit 52, and a plenum chamber 54.

The ring 50 is coupled to the housing means 22, and the plenum chamber 54 is coupled to the ring 50 outside the housing 22. The plenum chamber 54 includes a casing 55 shaped in the form of an annular section having indentations 56 in one face thereof. In particular, the casing has a lower indentation formed in communication with the conduit 52 and an upper indentation 57 spaced apart from the lower indentation 56 so that a horizontal rib 58 is formed therebetween. A plate 59 is affixed to the casing 55 to cover the lower indentation 56 and the rib 58. Thus, the chamber is formed to receive air from the conduit 52. The rib 58 is spaced apart from the plate 59 to form a slot-shaped nozzle orifice 60 therebetween. In practice, the nozzle orifice 60 is about 0.25 mm to 1.27 mm wide, preferably about 0.76 mm wide.

The conduit 52 is coupled at one end in fluid-flow communication with the plenum chamber 54 while the opposite end of the conduit 52 is coupled to a source of pressurized fluid, blower 62. Thus, a stream pressurized fluid, which in practice is air, can be introduced into the plenum 54 to flow from the nozzle orifice 60 to provide a fluid curtain substantially parallel to the stream of gas flowing through the stack 24. The plenum chamber 54 and the nozzle orifice 60 are positioned adjacent to the edge of aperture 26. The fluid barrier generated by the nozzle means 38 is directed towards the second aperture 28, in a direction substantially perpendicular to the beam 14 and substantially parallel to the flow of the gas through the stack 24.

With further reference to Fig. 1, the conduits 52 are shown coupled to blowers 62. Blowers 62 are also coupled to introduce a stream of pressurized air into each end of housing 22 near the windows 40 and 42. Valves 64 and 66 are provided to permit control of the streams of air from the blowers 62 into the housing 22.

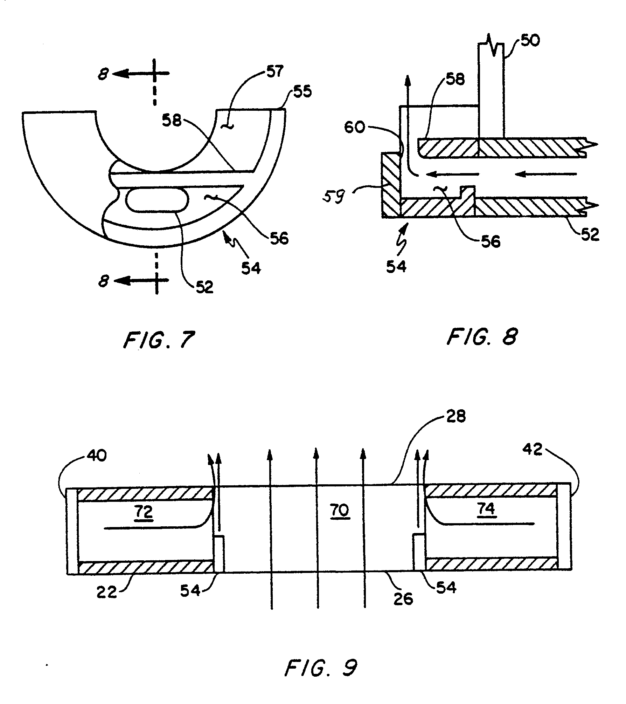

Referring to Fig. 9, there is shown a schematic side view of the direction and manner of gas flow in the operation of the apparatus of the present invention. Gas from the stack 24 enters the housing 22 via the first aperture 26 in the direction shown by the arrows. The gas then exits from the housing 22 via the second aperture 28. The fluid curtains generated by the nozzle means 38 and 39 are shown as arrows. In practice, the velocity of air forming the air curtain is preferably about 60 to 100 km/h. The air streams generated by the blowers 62 flow through the housing 22 as shown by the arrows. As can be seen the fluid curtains generated by the nozzle means 38 and 39 substantially confine the gas from the stack 24 to a middle zone 70 between the fluid curtains. Similarly, the fluid curtains confine the air streams from the blowers 62 to an outer zone 72 extending from the left window 40 to the middle zone 70 and to another outer zone 74 extending from the right window 42 to the middle zone 70.

It has been found that it is important to control the flow of air from the nozzle orifices 60, relative to the flow of air through the housing 22. The utilization of valves 64 and 66 permits such control. In practice, means other than valves 64 and 66 can be used to vary the flow of air. For example, discs having orifices of different sizes can be inserted in the conduits connecting the blowers to the housing 22.

It is important to calibrate an air curtain system when it is actually installed. The calibration procedure includes measuring the concentration of a gas in the stack, for example carbon dioxide, $CO_2$,

with a conventional, wet chemical method. Then the present system is used to take a series of measurements of the concentration of $CO_2$ while varying the ratio of air through the conduits 52 relative to the air directly into the housing 22. There is a range of ratios which result in good agreement between the concentration of $CO_2$ measured by the present system and the concentration measured by the conventional, wet chemical method. Normally, the ratio of air flow in the air curtain relative to the flow of air through the housing 22 is maintained in the ratio of between one-to-one and four-to-one, in term of the volumetric rates of flow.

In the apparatus of the present invention, the gas to be analyzed is confined to a well defined region. This is in essence controlling the variable L, the path length of the gas, to a constant value. By confining the gas to a well defined region, the accuracy and repeatability of the variable L is assured, thereby assuring the accuracy and repeatability of the measurement of the select properties of the gas.

The embodiment illustrated and described herein includes a detector 16 located on the opposite side of the stack from the source 12. Alternatively, the source and detector can be located on the same side of the stack and a reflector located on the opposite side. Thus, the beam of radiation travels from the source, through the stack and is reflected back through the stack to impinge the detector.

## Claims

1. An apparatus for analyzing a first gas stream comprising a cylindrical housing (22) having a middle zone (70) provided with two opposite first and second apertures (26, 28) for passing a first gas through the housing (22) intercepting a beam (14) of radiation enclosed by the housing (22) and being emitted from a source (12) on the one end of the housing (22) and impinging on a detector (16) on the other end of the housing (22), and having two outer zones (72, 74) between the middle zone (70) and the source (12) and the detector (16), respectively, which outer zones (72, 74) are connectable (64, 66) with blowers (62) for introducing a second gas, characterized in that the blowers (62) are connected by conduits (52) with nozzle means (38, 39) arranged between each outer zone (72, 74) and the middle zone (70) at the extremities of the first aperture (26) generating a fluid curtain of the second gas substantially parallel to the flow direction of the first gas and substantially perpendicular to the beam (14) of radiation and directed to impinge the ends of the second aperture (28), and in that the ratio of the volumetric flow rate of the second gas through the nozzle means (38, 39) and through the corresponding outer zone (72, 74) of the housing (22) is one-to-one to four-to-one.

2. An apparatus according to claim 1, characterized in that each nozzle means (38, 39) comprises a ring (50) coupled to each outer zone (72, 74) of the housing (22), a plenum chamber (54) mounted on the ring (50) and positioned adjacent to the edge of the aperture (26) and including a casing (55) shaped in the form of an annular section, having a lower indentation (56) communicated with the conduit (52) and an upper indentation (57) spaced apart from the lower indentation (56) by a rib (58), a plate (59) covering the lower indentation (56) and the rib (58) which is spaced from the plate (59) to form a slot shaped nozzle orifice (60) therebetween.

3. An apparatus according to claim 2, characterized in that the slot shaped nozzle orifice (60) is about 0.25 to 1.27 mm, preferably about 0.76 mm wide.

4. An apparatus according to any one of the claims 1 to 3, characterized in that the velocity of the stream of the second gas forming the air curtain is about 60 to 100 km/h.

## Patentansprüche

1. Vorrichtung zum Analysieren eines ersten Gasstroms, die ein zylindrisches Gehäuse (22) mit einer mittleren Zone (70), welche mit einer ersten und einer zweiten Öffnung (26, 28), die gegenüberliegen, für den Durchgang eines ersten Gases durch das Gehäuse (22) versehen ist, das einen Strahl (14) einer Strahlung unterbricht, die von dem Gehäuse (22) eingeschlossen ist, von einer Quelle (12) an dem einen Ende des Gehäuses (22) emittiert wird und auf einen Detektor (16) an dem anderen Ende des Gehäuses (22) auftrifft, und mit zwei äußeren Zonen (72, 74) zwischen der mittleren Zone (70) und der Quelle (12) bzw. dem Detektor (16) aufweist, wobei die äußeren Zonen (72, 74) mit Gebläsen (62) zum Einführen eines zweiten Gases verbindbar (64, 66) sind, dadurch gekennzeichnet, daß die Gebläse (62) durch Leitungen (52) mit Düseneinrichtungen (38, 39) verbunden sind, welche zwischen jeder äußeren Zone (72, 74) und der mittleren Zone (70) an den Enden der ersten Öffnung (26) angeordnet sind, einen Fluidvorhang des zweiten Gases im wesentlichen parallel zur Strömungsrichtung des ersten Gases und im wesentlichen senkrecht zu dem Strahl (14) der Strahlung erzeugen und für ein Auftreffen auf die Enden der zweiten Öffnung (28) ausgerichtet sind, und daß das Verhältnis des Volumenstroms des zweiten Gases durch die Düseneinrichtungen (38, 39) und durch die entsprechende äußere Zone (72, 74) des Gehäuses (22) eins zu eins bis vier zu eins beträgt.

2. Vorrichtung nach Anspruch 1, dadurch gekennzeichnet, daß jede Düseneinrichtung (38, 39) einen Ring (50), der mit jeder äußeren Zone (72, 74) des Gehäuses (22) gekoppelt ist, eine Umwälzkammer (54), die an dem Ring (50) angebracht ist, angrenzend an dem Rand der Öffnung (26) positioniert ist und ein Gehäuse (55) aufweist, daß die Form eines Ringabschnitts aufweist, der eine untere, mit der Leitung (52) verbundene Ausnehmung (56) und eine obere im Abstand von der unteren Ausnehmung (56) durch eine Rippe (58) angeordnete Ausnehmung (57) hat, und eine Platte (59) aufweist, welche die untere Ausnehmung (56) und die Rippe (58) abdeckt, die im Abstand von der Platte (59) angeordnet ist, um dazwischen eine schlitzförmige Düsenöffnung (60) zu bilden.

3. Vorrichtung nach Anspruch 2, dadurch gekennzeichnet, daß die schlitzförmige Düsenöffnung (60) etwa 0,25 bis 1,27 mm, vorzugsweise etwa 0,76 mm breit ist.

4. Vorrichtung nach einem der Ansprüche 1 bis 3, dadurch gekennzeichnet, daß die Geschwindigkeit des den Luftvorhang bildenden Stroms des zweiten Gases etwa 60 bis 100 km/h beträgt.

**Revendications**

1. Appareil d'analyse d'un premier courant de gaz, comprenant un boîtier cylindrique (22) présentant une zone médiane (70) munie de deux ouvertures opposées, une première et une seconde (26, 28), permettant de faire passer un premier gaz à travers le boîtier (22) en interceptant un faisceau (14) de rayonnement qui est enfermé par le boîtier (22) et qui est émis à partir d'une source (12) située sur la première extrémité du boîtier (22) et tombe sur un détecteur (16) situé sur l'autre extrémité du boîtier (22), et présentant deux zones extérieures (72, 74) situées entre la zone médiane (70) et respectivement la source (12) et le détecteur (16), ces zones extérieures (72, 74) pouvant être reliées (64, 66) à des ventilateurs (62) afin d'introduire un second gaz, caractérisé en ce que les ventilateurs (62) sont reliés par des conduits (52) à des moyens éjecteurs (38, 39) disposés entre chaque zone extérieure (72, 74) et la zone médiane (70) aux extrémités de la première ouverture (26) en créant un rideau de fluide du second gaz qui est sensiblement parallèle à la direction d'écoulement du premier gaz et sensiblement perpendiculaire au faisceau (14) de rayonnement et est dirigé de façon à tomber sur les extrémités de la seconde ouverture (28), et en ce que le rapport du débit volumétrique du second gaz à travers les moyens éjecteurs (38, 39) et à travers la zone extérieure correspondante (72, 74) du boîtier (22) est de un-pour-un à quatre-pour-un.

2. Appareil selon la revendication 1, caractérisé en ce que chaque moyen éjecteur (38, 39) comprend un anneau (50) raccordé à chaque zone extérieure (72, 74) du boîtier (22), une chambre collectrice (54) montée sur l'anneau (50) et disposée au voisinage du bord de l'ouverture (26) et comprenant une enveloppe (55) conformée en forme de section annulaire, présentant une cavité inférieure (56) communiquant avec le conduit (52) et une cavité supérieure (57) séparée de la cavité inférieure (56) par une nervure (58), une plaque (59) recouvrant la cavité inférieure (56) et la nervure (58) qui est située à distance de la plaque (59) de façon à former entre elles un orifice éjecteur en forme de fente (60).

3. Appareil selon la revendication 2, caractérisé en ce que l'orifice éjecteur en forme de fente (60) est large d'environ 0,25 à 1,27 mm, de préférence d'environ 0,76 mm.

4. Appareil selon l'une quelconque des revendication 1 à 3, caractérisé en ce que la vitesse du courant du second gaz formant le rideau d'air est d'environ 60 à 100 km/h.

FIG. 1

FIG. 2

FIG. 3

FIG. 4

FIG. 5

FIG. 6

FIG. 7

FIG. 8

FIG. 9